# EUROPEAN PATENT APPLICATION

(11) **EP 2 472 888 A2**
(43) Date of publication of application: **04.07.2012**
(21) Application number: 11195163.8
(22) Date of filing: 22.12.2011
(51) Int. Cl.: H04N 13/04

(54) **Glasses for three-dimensional image display apparatuses**

(30) Priority: 31.12.2010 KR 20100140573
(71) Applicant: Samsung Electronics Co., Ltd., Suwon-si, Gyeonggi-do 442-742 (KR)
(72) Inventor: Kim, Min Chul, Gyeonggi-do (KR); Jang, Se Ki, Gyeonggi-do (KR); Lee, Seo Joon, Gyeonggi-do (KR); Hwang, Sung Ho, Gyeonggi-do (KR)
(74) Representative: Davies, Robert Ean

(57) **Abstract**

Glasses for use with three-dimensional image display apparatuses include a pair of liquid crystal shutters, a main circuit board to drive them, and a battery. The main circuit board and the battery are disposed at the tip parts provided at the rear ends of the temple parts, and thus the weight of the glasses is distributed to the rear portion thereof, thereby reducing inconvenience in use generated when the load of the glasses for three-dimensional image display apparatuses is concentrated upon a specific region of a user face.

## Description

### BACKGROUND

### 1. Field

The inventive concept relates to glasses for watching images displayed through a three-dimensional image display apparatus.

### 2. Description of the Related Art

Glasses are used to watch three-dimensional images displayed through a three-dimensional image display apparatus.

In one type of three-dimensional image display apparatus, images for right and left eyes are alternately displayed. Glasses for watching such images include a liquid crystal shutter for each eye, operated in synchronization with the three-dimensional image display apparatus.

The liquid crystal shutter for the right eye transmits light while the three-dimensional image display apparatus displays the image for the right eye, and blocks light while the three-dimensional image display apparatus displays the image for the left eye, and vice-versa for the left eye.

That is, a user wearing the glasses for three-dimensional image display apparatuses may view only the image for the right eye through the liquid crystal shutter for the right eye and watch only the image for the left eye through the liquid crystal shutter for the left eye, thereby perceiving the three-dimensional effect.

### SUMMARY

In accordance with one exemplary embodiment, glasses for use with a three-dimensional image display apparatus include a first liquid crystal shutter positioned to block or transmit light to a right eye, and a second liquid crystal shutter positioned to block or transmit light to a left eye, a front unit including a first rim part supporting edges of the first liquid crystal shutter, a second rim part supporting edges of the second liquid crystal shutter, and a bridge part connecting the first rim part and the second rim part to each other, a first temple extending backwardly from one end of the front unit, and a second temple extending backwardly from another end of the front unit, a main circuit board to control the first and second liquid crystal shutters to block or transmit light, and a battery that supplies power to the first and second liquid crystal shutters and the main circuit board, wherein the main circuit board is positioned at one of the first and the second temples, and the battery is positioned at the other one of the first and the second temples.

The first temple may include a respective rear end and a first tip part at the rear end, with the main circuit board disposed at the first tip part, and the second temple may include a respective rear end with a second tip part at the rear end with the battery disposed at the second tip part.

The glasses for three-dimensional image display apparatuses may further include a substrate accommodation part provided at the first tip part to accommodate the main circuit board, a substrate cover installed at the first tip part to cover the substrate accommodation part, a battery accommodation part provided at the second tip part to accommodate the battery, and a battery cover installed at the second tip part to cover the battery accommodation part.

The glasses for three-dimensional image display apparatuses may further include a shutter circuit board disposed at the bridge unit, the first liquid crystal shutter and the second liquid crystal shutter being connected to the shutter circuit board.

The glasses for three-dimensional image display apparatuses may further include a first flexible circuit board disposed at the inside of the first temple and the first rim part, connecting the main circuit board to the shutter circuit board, and a second flexible circuit board disposed at the inside of the second temple and the second rim part, connecting the battery to the shutter circuit board.

The glasses for three-dimensional image display apparatuses may further include a first flexible circuit board disposed at the first temple and connecting to the main circuit board, a second flexible circuit board disposed at the second temple and connecting to the battery, a third flexible circuit board connecting the first flexible circuit board to the first liquid crystal shutter, a fourth flexible circuit board connecting the second flexible circuit board to the second liquid crystal shutter, and a fifth flexible circuit board connecting the first liquid crystal shutter and the second liquid crystal shutter to each other.

The glasses for three-dimensional image display apparatuses may further include a reception module disposed on the main circuit board to receive a signal from a three-dimensional image display apparatus.

The glasses for three-dimensional image display apparatuses may further include a reception module disposed on the shutter circuit board to receive a signal from a three-dimensional image display apparatus.

The glasses for three-dimensional image display apparatuses may further include a subsidiary circuit board disposed in the battery accommodation part to assist with the function of the main circuit board.

The glasses for three-dimensional image display apparatuses may further include a USB port disposed on the main circuit board.

In accordance with another aspect of the present invention, glasses for three-dimensional image display apparatuses include a first liquid crystal shutter and a second liquid crystal shutter disposed at right and left sides in parallel, a front unit including a first rim part and a second rim part respectively supporting the edges of the first liquid crystal shutter and the second liquid crystal shutter and a bridge part connecting the first rim part and the second rim part to each other, a first temple and a second temple extending backwardly from different sides of the front unit, a main circuit board disposed at a first tip part at the rear end of the first temple, a battery disposed at a second tip part at the rear end of the second temple, a shutter circuit board disposed at the bridge part, the first liquid crystal shutter and the second liquid crystal shutter being connected to the shutter circuit board, and a first flexible circuit board disposed at the inside of the first temple and the first rim part to connect the main circuit board to the shutter circuit board, and a second flexible circuit board disposed at the inside of the second temple and the second rim part to connect the battery to the shutter circuit board.

In one exemplary embodiment, a pair of glasses may include a pair of liquid crystal shutter lenses held within a front unit, a pair of temples extending backward from different sides of the front unit, and a battery compartment with battery contacts, positioned at a backward end of one of the temples, the contacts connecting electrically through the one of the temples to the pair of liquid crystal shutter lenses.

In this exemplary embodiment, the pair of glasses may further include a main circuit board, at a backward end of one of the temples, that controls each of the pair of liquid crystal shutter lenses to alternately transmit and block light.

In this exemplary embodiment, the pair of glasses may further include a shutter circuit board between the pair of liquid crystal shutter lenses, that controls each of the pair of liquid crystal shutter lenses to alternately transmit and block light.

In this exemplary embodiment, the pair of glasses may further include a battery, in the battery compartment, in contact with the battery contacts.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a perspective view of glasses for three-dimensional image display apparatuses in accordance with one exemplary embodiment;
FIG. 2 is an exploded perspective view of the glasses for three-dimensional image display apparatuses in accordance with the exemplary embodiment;
FIG. 3 is a perspective view illustrating connecting relations among electric parts within the glasses for three-dimensional image display apparatuses in accordance with the exemplary embodiment;
FIG. 4 is an exploded perspective view illustrating an installed state of a nose pad applied to the glasses for three-dimensional image display apparatuses in accordance with the exemplary embodiment; and
FIG. 5 is a perspective view illustrating connecting relations among electric parts within glasses for three-dimensional image display apparatuses in accordance with another exemplary embodiment.

### DETAILED DESCRIPTION

Reference will now be made in detail to the exemplary embodiments, examples of which are illustrated in the accompanying drawings, wherein like reference numerals refer to like elements throughout.

Hereinafter, glasses for three-dimensional image display apparatuses in accordance with an exemplary embodiment will be described with reference to the accompanying drawings.

The glasses for three-dimensional image display apparatuses in accordance with the exemplary embodiment are used to watch images displayed on a three-dimensional image display apparatus which alternately displays an image for the right eye and an image for the left eye.

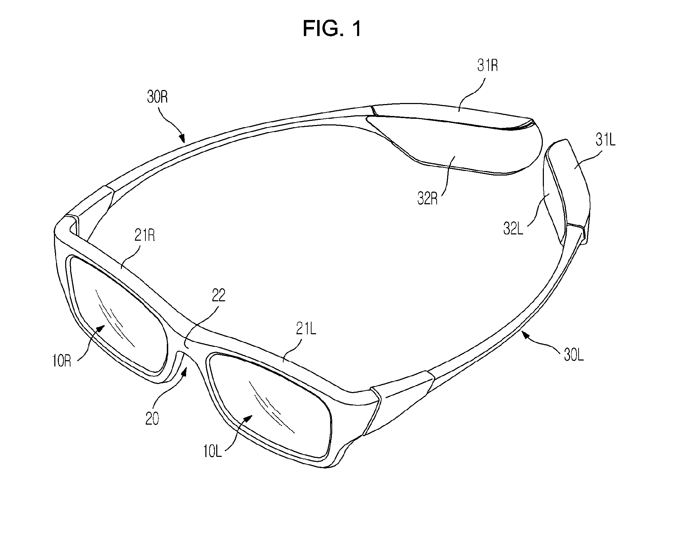

The glasses for three-dimensional image display apparatuses in accordance with the exemplary embodiment, as shown in FIG. 1, includes two liquid crystal shutters 10R and 10L disposed at right and left sides in parallel and respectively corresponding to two eyes of a user wearing the glasses for three-dimensional image display apparatuses, a front unit 20 on which the two liquid crystal shutters 10R and 10L are installed, and first and second temples 30R and 30L extending backwardly from both sides of the front unit 20 and hung on user ears.

The liquid crystal shutters 10R and 10L enable any one of an image for the right eye and an image for the left eye displayed by a three-dimensional image display apparatus to selectively pass through the liquid crystal shutter 10R or 10L and then to be transmitted to the user's eyes, and block the other of the image for the right eye and the image for the left eye. The two liquid crystal shutters 10R and 10L include a first liquid crystal shutter 10R to pass only the image for the right eye to transmit the image for the right eye to the user's right eye, and a second liquid crystal shutter 10L to pass only the image for the left eye to transmit the image for the left eye to the user's left eye. That is, the first liquid crystal shutter 10R passes the image for the right eye and blocks the image for the left eye, and the second liquid crystal shutter 10L passes the image for the left eye and blocks the image for the right eye.

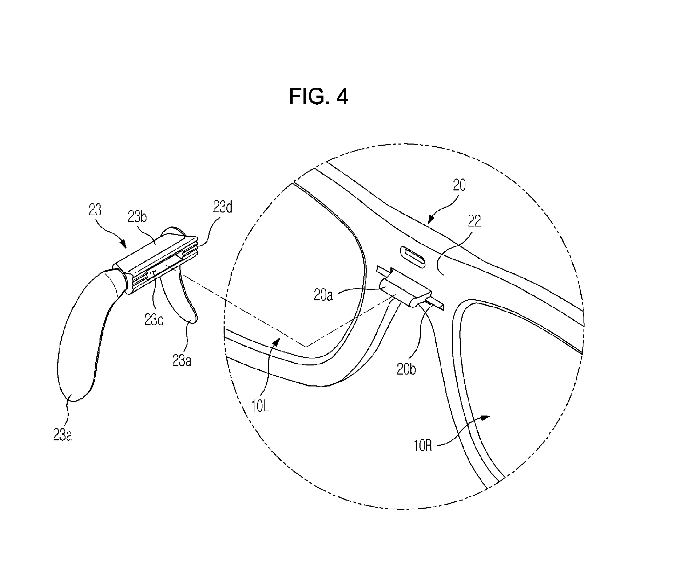

The front unit 20 includes a first rim part 21 R and a second rim part 21 L respectively supporting the edges of the two liquid crystal shutters 10R and 10L, and a bridge part 22 connecting the first rim part 21 R and the second rim part 21 L to each other. A nose pad 23, supported by the user's nose, is on the rear surface of the bridge part 22, as shown in FIG. 4. The nose pad 23 includes a pair of pad parts 23a intended to rest on opposite sides of the user's nose, and a nose arm part 23b connecting the two pad parts 23a to each other and installed on the rear surface of the bridge part 22.

In this embodiment, the nose pad 23 may be installed on the rear surface of the bridge part 22 so as to be rotatable within a given range, and to be rotated according to the shape of the user's nose. In order to install the nose pad 23, a hinge part 20a on which the nose pad 23 is rotatably installed protrudes backwardly from the rear surface of the bridge part 22, and a hinge groove 23c into which the hinge part 20a is inserted is provided on the nose arm part 23b of the nose pad 23. The front end of the hinge part 20a protruding backwardly has an arc-shaped cross section and a greater thickness than other portions of the bridge part 22, so as to rotate the nose pad 23. Further, the entrance end of the hinge groove 23c is narrower than the front end of the hinge part 20a and the inside of the hinge groove 23c is wider than the front end of the hinge part 20a so as to support the front end of the hinge part 20a by the hinge groove 23c, thereby allowing the hinge part 20a to be inserted into the hinge groove 23c in an interference type of fit.

Further, in order to maintain a state in which the nose pad 23 is rotated at a designated angle, hanging parts 20b protrude from both sides of the hinge part 20a, and irregular parts (two-dimensional image) having concave and convex portions are formed at both sides of the hinge groove 23c of the nose arm part 23b. Therefore, the rotated state of the nose pad 23 may be maintained as before the hanging parts 20b are engaged with the concave portions of the irregular parts, and force of a given level or more is applied.

As shown in Fig. 1, in this exemplary embodiment, the first temple 30R and the second temple 30L extend from both ends of the front unit 20, and a first tip part 31 R and a second tip part 31 L provided with lower surfaces extending backwardly so as to be inclined downwardly and hung on the user's ears, are respectively formed at the rear ends of the first temple 30R and the second temple 30L.

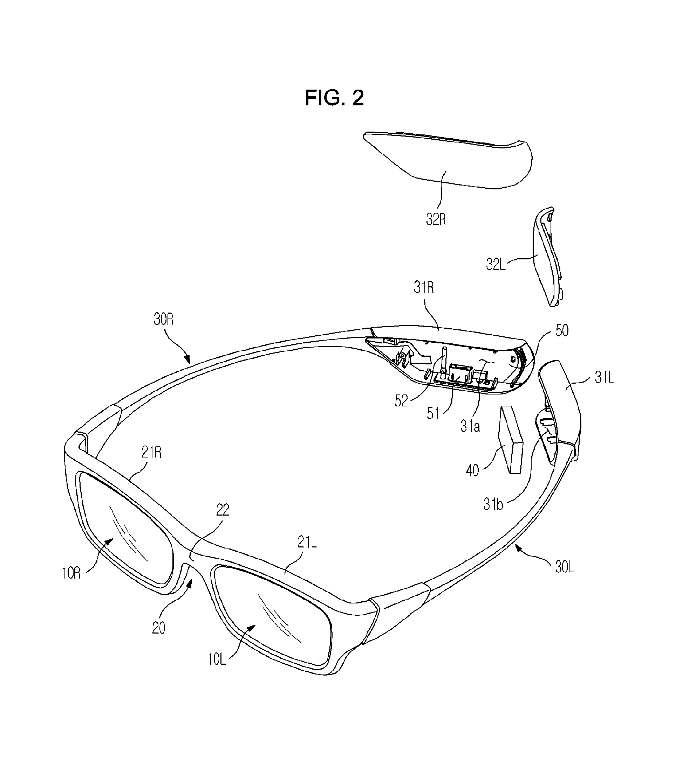

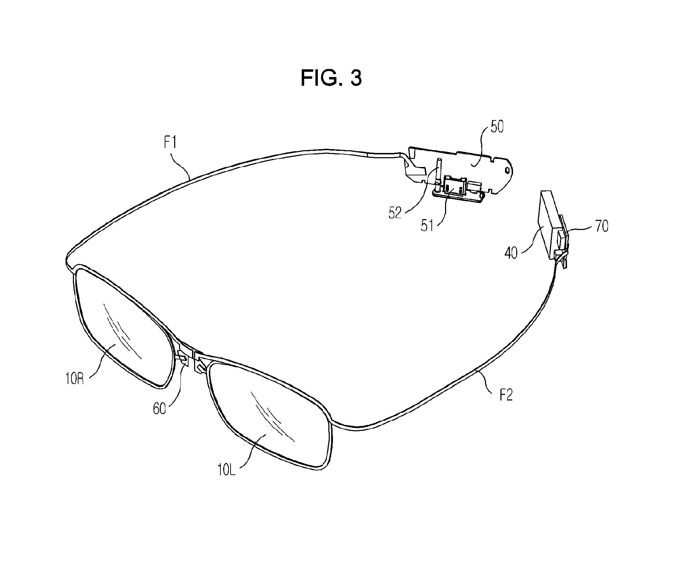

Further, the glasses for three-dimensional image display apparatuses in accordance with the exemplary embodiment, as shown in FIGS. 2 and 3, includes a battery 40 to supply power required to drive the liquid crystal shutters 10R and 10L, and a main circuit board 50 to control overall operation of the glasses for three-dimensional image display apparatuses. Disposed on the main circuit board 50 is a USB port 51 to charge the battery 40 or to input various information. A reception module 52 is also disposed on the main circuit board 50, and includes an RF reception module or a Bluetooth reception module to receive signals from the three-dimensional image display apparatus. Such signals may be referred to as communication signals, and may include any type of control, coordination, or synchronization signals.

Turning to Fig. 3, a shutter circuit board 60, contacting the first liquid crystal shutter 10R and the second liquid crystal shutter 10L to control operation of the two liquid crystal shutters 10R and 10L, is disposed within the bridge part 22 (see Fig. 2), and a subsidiary circuit board 70 installed in a battery accommodation part 31 b (see Fig. 2), which will be described later, to assist with the function of the main circuit board 50.

In this embodiment, the main circuit board 50 and the battery 40 are respectively installed at the first tip part 31 R and the second tip part 31 L provided at the rear ends of the temples 30R and 30L. If the main circuit board 50 and the battery 40 are disposed in this way, load of the glasses for three-dimensional image display apparatuses is distributed to the rear portion of the glasses, i.e., to the tip parts 31 R and 31 L of the temples 30R and 30L at which the main circuit board 50 and the battery 40 are disposed. This helps prevent the concentration of the load of the glasses upon any specific region of the user's face, thereby reducing fatigue generated when using the glasses for a long time.

In this embodiment, a substrate accommodation part 31 a in which the main circuit board 50 is accommodated is provided at the first tip part 31 R, and the battery accommodation part 31 b in which the battery 40 is accommodated is provided at the second tip part 31 L. The battery accommodation part may also be understood to be a battery compartment. Further, a substrate cover 32R to cover the substrate accommodation part 31 a is installed at the first tip part 31 R, and a battery cover 32L is installed at the second tip part 31 L.

As shown in Fig. 3, the glasses for three-dimensional image display apparatuses further include flexible circuit boards F1 and F2 to respectively connect the main circuit board 50 and the battery 40 to the two liquid crystal shutters 10R and 10L.

In this embodiment, the flexible circuit boards F1 and F2 include a first flexible circuit board F1 disposed at the inside of the first temple 30R and the first rim part 21 R to connect the main circuit board 50 to the shutter circuit board 60, and a second flexible circuit board F2 disposed at the inside of the second temple 30L and the second rim part 21 L to connect the battery 40 or the subsidiary circuit board 70 to the shutter circuit board 60. More particularly, a flexible circuit board is connected to the battery 40 via battery contacts (not shown) located in the battery compartment. That is to say, the battery can provide power to the liquid crystal shutter lenses through the battery contacts, which are electrically connected to the liquid crystal shutter lenses through the appropriate temple or temples.

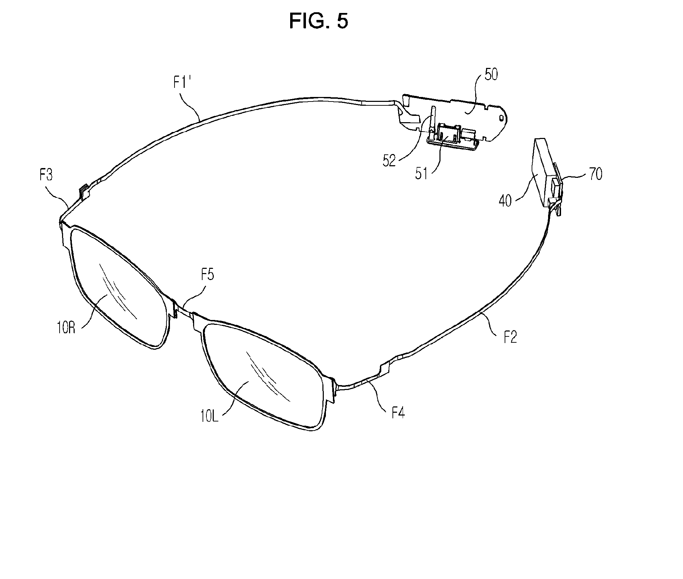

This embodiment illustrates that the temples 30R and 30L are formed integrally with the front unit 20 and thus the first circuit board F1 and the second circuit board F2 are connected to the shutter circuit board 60 through the temples 30R and 30L and the rim parts 21 R and 21 L. The structures of the temples 30R and 30L and the front unit 20 are not, however, limited thereto. In the case of glasses for three-dimensional image display apparatuses in which the temples and the front unit are separately manufactured, and then the temples are hinged to the front unit, flexible circuit boards may be provided, as shown in FIG. 5.

That is, flexible circuit boards F1', F2', F3, F4 and F5 include a first flexible circuit board F1' provided with one end connected to the main circuit board 50, a second flexible circuit board F2' provided with one end connected to the battery 40 and the subsidiary circuit board 70, a third flexible circuit board F3 connecting the first flexible circuit board F1' to the first liquid crystal shutter 10R, a fourth flexible circuit board F4 connecting the second flexible circuit board F2' to the second liquid crystal shutter 10L, and a fifth flexible circuit board F5 connecting the first liquid crystal shutter 10R and the second liquid crystal shutter 10L to each other. Here, the connection between the first flexible circuit board F1' and the third flexible circuit board F3 and the connection between the second flexible circuit board F2' and the fourth flexible circuit board F4 are carried out at the regions where the temples are hinged to the front unit.

Further, although this embodiment illustrates the reception module 52 as being disposed on the main circuit board 50, which is disposed at the first tip part 30R, the position of the reception module 52 is not limited thereto. The reception module 52 may alternatively be disposed on the shutter circuit board 60, which is disposed in the bridge part 22.

As is apparent from the above description, in glasses for three-dimensional image display apparatuses in accordance with the exemplary embodiment, a main circuit board and a battery are respectively disposed at tip parts provided at the rear ends of temples, and thus the load of the glasses for three-dimensional image display apparatuses is distributed to the rear portion thereof, thereby reducing the fatigue that may be presented when the load of the glasses is concentrated upon a specific region of a user's face.

Although a few embodiments of the present invention have been shown and described, it will be appreciated by those familiar with this field that changes may be made in these embodiments without departing from the principles and spirit of the inventive concept, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. Glasses for three-dimensional image display apparatuses comprising:
a first liquid crystal shutter and a second liquid crystal shutter disposed at right and left sides in parallel;
a front including a first rim part and a second rim part respectively supporting the edges of the first liquid crystal shutter and the second liquid crystal shutter and a bridge part connecting the first rim part and the second rim part to each other;
a first temple and a second temple extending backwardly from both sides of the front;
a main circuit board to control overall operation of the glasses for three-dimensional image display apparatuses; and
a battery to supply power,
wherein the main circuit board and the battery are disposed at the first temple and the second temple.

2. The glasses for three-dimensional image display apparatuses according to claim 1, wherein:
the first temple includes a first tip part at the rear end thereof so that the main circuit board is disposed at the first tip part; and
the second temple includes a second tip part at the rear end thereof so that the battery is disposed at the second tip part.

3. The glasses for three-dimensional image display apparatuses according to claim 2, further comprising:
a substrate accommodation part provided at the first tip part to accommodate the main circuit board;
a substrate cover installed at the first tip part to cover the substrate accommodation part;
a battery accommodation part provided at the second tip part to accommodate the battery; and
a battery cover installed at the second tip part to cover the battery accommodation part.

4. The glasses for three-dimensional image display apparatuses according to claim 1, further comprising a shutter circuit board disposed at the bridge unit, the first liquid crystal shutter and the second liquid crystal shutter being connected to the shutter circuit board.

5. The glasses for three-dimensional image display apparatuses according to claim 4, further comprising:
a first flexible circuit board disposed at the inside of the first temple and the first rim part to connect the main circuit board to the shutter circuit board; and
a second flexible circuit board disposed at the inside of the second temple and the second rim part to connect the battery to the shutter circuit board.

6. The glasses for three-dimensional image display apparatuses according to claim 4, further comprising:
a first flexible circuit board disposed at the first temple and connected to the main circuit board;
a second flexible circuit board disposed at the second temple and connected to the battery;
a third flexible circuit board connecting the first flexible circuit board to the first liquid crystal shutter;
a fourth flexible circuit board connecting the second flexible circuit board to the second liquid crystal shutter; and
a fifth flexible circuit board connecting the first liquid crystal shutter and the second liquid crystal shutter to each other.

7. The glasses for three-dimensional image display apparatuses according to claim 1, further comprising a reception module disposed on the main circuit board to receive a signal from a three-dimensional image display apparatus.

8. The glasses for three-dimensional image display apparatuses according to claim 4, further comprising a reception module disposed on the shutter circuit board to receive a signal from a three-dimensional image display apparatus.

9. The glasses for three-dimensional image display apparatuses according to claim 3, further comprising a subsidiary circuit board disposed in the battery accommodation part to assist with the function of the main circuit board.

10. The glasses for three-dimensional image display apparatuses according to claim 3, further comprising an USB port disposed on the main circuit board.
